# NEUE EUROPÄISCHE PATENTSCHRIFT

(11) **EP 2 483 708 B2**
(45) Veröffentlichungstag und Bekanntmachung des Hinweises auf die Entscheidung über den Einspruch: **03.05.2023**
(45) Hinweis auf die Patenterteilung: 10.06.2015
(21) Anmeldenummer: 10745588.3
(22) Anmeldetag: 13.08.2010
(51) Int. Cl.: G01S 13/93, G01S 17/93, G08G 1/16, B60W 40/04, B60Q 1/48

(54) **VERFAHREN ZUR ABBILDUNG DES UMFELDS EINES FAHRZEUGS**
METHOD FOR DISPLAYING THE SURROUNDINGS OF A VEHICLE
PROCÉDÉ POUR REPRÉSENTER L'ENVIRONNEMENT D'UN VÉHICULE

(30) Priorität: 02.10.2009 DE 102009045286
(43) Veröffentlichungstag der Anmeldung: 08.08.2012
(73) Patentinhaber: Robert Bosch GmbH, 70442 Stuttgart (DE)
(72) Erfinder: SCHOENHERR, Michael, 70190 Stuttgart (DE); PAMPUS, Christian, 71229 Leonberg (DE); SCHMID, Dirk, 75397 Simmozheim (DE); SCHERL, Michael, 74321 Bietigheim (DE); URBAN, Werner, 71665 Vaihingen/Enz (DE); FEHSE, Meike, 71254 Ditzingen (DE); ZIMMERMANN, Uwe, 71686 Remseck (DE)
(86) Internationale Anmeldenummer: PCT/EP2010/061852
(87) Internationale Veröffentlichungsnummer: WO 2011/038978

(56) Entgegenhaltungen:
- EP-A1- 1 643 269
- EP-A1- 2 068 173
- EP-A2- 1 475 764
- DE-A1- 10 324 897
- DE-A1- 19 933 732
- DE-A1-102005 006 965
- DE-A1-102005 061 718
- DE-A1-102007 039 038
- US-A1- 2005 243 301

## Beschreibung

### Stand der Technik

Die Erfindung geht aus von einem Verfahren zur Ermittlung der Kollisionswahrscheinlichkeit eines Fahrzeugs mit einem Objekt.

Bei Fahrassistenz-Systemen, die die Umgebung des Fahrzeugs berücksichtigen, zum Beispiel Systeme, die den Fahrer des Kraftfahrzeugs beim Einparken unterstützen oder Systeme, die zur Einhaltung eines ausreichend großen Abstands zu einem vorausfahrenden Fahrzeug eingesetzt werden, ist eine gute Erfassung der Umgebung notwendig. Die Erfassung der Umgebung erfolgt zum Beispiel bei Systemen zur Unterstützung des Einparkvorganges durch Ultraschallsensoren. Insbesondere wenn ein größerer Bereich des Umfelds des Fahrzeugs beobachtet werden soll, werden auch Radarsensoren oder Kameras eingesetzt.

Einparkassistenz-Systeme, die den Fahrer in eine Parklücke führen, sind zum Beispiel aus DE-A 10 2004 047484 oder auch aus EP-A 1 270 367 bekannt. Bei solchen Einparkassistenz-Systemen wird zunächst während der Vorbeifahrt eine Parklücke vermessen und anschließend der Fahrer mittels Hinweisen in die Parklücke geführt. Das Führen in die Parklücke kann dabei in passiver Form erfolgen, wobei der Fahrer Lenkwinkelvorgaben sowie Losfahr- und Anhaltebefehle übermittelt bekommt, oder in aktiver Form, in der der Fahrer nur Losfahr- und Anhaltevorgaben erhält, die Lenkung aber automatisch über ein Lenksteller-System erfolgt. Vom eingesetzten Einparkassistenz-System wird dabei festgelegt, ob und wie das Fahrzeug von der aktuellen Position aus in die Parklücke geführt werden kann und auch die Endposition für den Parkvorgang bestimmt.

Während des Einparkens wird durch abstandsmessende Sensoren, die im Allgemeinen in den Stoßfängern des Fahrzeugs angeordnet sind, die Umgebung überwacht. Die Abstände zu detektierten Objekten können dem Fahrer angezeigt werden und der Fahrer wird vor drohenden Kollisionen mit umgebenden Objekten gewarnt. Wenn das Einparkassistenz-System eine Rückfahrkamera umfasst, wird der Fahrer auch durch ein Videobild über den Bereich hinter dem Fahrzeug informiert. Die Kontrolle über Beschleunigung und Verzögerung beim Einparkvorgang liegt bei den bekannten Systemen beim Fahrer. Durch die Stellung des Fahrpedals wird die Einparkgeschwindigkeit bestimmt und der Fahrer wird kurz vor Erreichen der Endposition des Einparkvorgangs aufgefordert, das Fahrzeug zum Stillstand zu bremsen. Der Fahrer hat bei diesem System während des gesamten Einparkvorgangs jederzeit die volle Verantwortung hinsichtlich der Längsführung, das heißt der Vor- beziehungsweise Rückwärtsbewegung. Dies führt insbesondere bei nicht vorhergesehenen Situationen, zum Beispiel bei einem plötzlichen Auftauchen eines vorher nicht identifizierten Hindernisses während des Einparkens, dazu, dass der Fahrer selbständig für einen sich daraus ergebenden unbekannten Bremsvorgang verantwortlich ist.

In neusten Entwicklungen von Einparkassistenz-Systemen soll auch die Längsführung durch einen automatischen Eingriff in Antrieb und/oder Bremse übernommen werden. Bei diesen Systemen ist es von elementarer Bedeutung, dass rechtzeitig Objekte detektiert werden, mit denen das Fahrzeug kollidieren kann, um eine drohende Kollision durch einen dann automatisch einzuleitenden Bremsvorgang zu unterbinden. Das Dokument EP-A-1 475 764 offenbart ein Verfahren bei dem ein Gegenstand abgetastet wird und aus einer Vielzahl von erfassten Punkten eine Kontur des Gegenstands ermittelt wird. Zum Quantifizieren einer Kollisionswahrscheinlichkeit wird die Überdeckung der Gegenstandskontur und der Fahrzeugkontur berechnet. Das Verfahren greift auf eine hohe Anzahl von Punkten auf und ist somit rechenaufwendig.

### Offenbarung der Erfindung

### Vorteile der Erfindung

Bei dem erfindungsgemäßen Verfahren zur Ermittlung der Kollisionswahrscheinlichkeit eines Fahrzeugs mit einem Objekt sind folgende Schritte umfasst:
(a) Abbilden der Umgebung des Fahrzeugs,
(b) Ermitteln eines vom Fahrzeug zu durchfahrenden Fahrschlauchs,
(c) Bestimmen des Überdeckungsgrades des Objekts mit dem Fahrzeugschlauch und damit der Kollisionswahrscheinlichkeit unter Berücksichtigung der Positionsunschärfe.

Vorteil des erfindungsgemäßen Verfahrens ist es, dass die ermittelten Daten nur einmal erfasst werden müssen und dann von allen im Fahrzeug vorhandenen Fahrassistenz-Systemen verwendet werden können. Damit die Daten von FahrassistenzSystemen verwendet werden können, ist eine allgemeine Objektschnittstelle notwendig, mit der die Eigenschaften des Objekts beschrieben werden. Für ein FahrassistenzSystem ist es dabei insbesondere wichtig, den freien Bereich um das Fahrzeug, in dem sich keine Objekte befinden, zu kennen. Eine Kenntnis der genauen Form eines Objektes ist im Allgemeinen nicht notwendig. Aus diesem Grund ist es üblicherweise ausreichend, ein Objekt durch zwei Punkte, die durch eine Strecke verbunden werden können, zu beschreiben. Die Strecke, die durch die zwei Punkte markiert wird, stellt dann die Begrenzung des freien Bereiches durch ein Objekt dar.

Um die ermittelten Daten im Fahrassistenz-System einsetzen zu können, ist es weiterhin vorteilhaft, wenn als weiteres Element in der Schnittstelle abgelegt wird, ob das detektierte Objekt punktförmig ist oder ob die Koordinatenpunkte eine Strecke markieren.

Da im Allgemeinen eine zweidimensionale Darstellung ausreichend ist und die Höhe des Objektes für den Einsatz in einem Fahrassistenz-System keine Rolle spielt, werden die Punkte vorteilhafterweise in einem zweidimensionalen, kartesischen Koordinatensystem dargestellt. Als Ursprung des kartesischen Koordinatensystems wird zum Beispiel der Mittelpunkt der Hinterachse verwendet. Es kann aber auch jeder andere, klar definierte Punkt im Bezug auf das Fahrzeug als Ursprung des Koordinatensystems verwendet werden. Die Abszisse und die Ordinate des kartesischen Koordinatensystems sind im Allgemeinen rechtwinklig zueinander angeordnet. Dabei kann die Abszisse in jede beliebige Richtung zeigen. Bevorzugt ist es jedoch, dass die Abszisse in Fahrtrichtung ausgerichtet ist. Wenn als Ursprung des Koordinatensystems der Mittelpunkt der Hinterachse verwendet wird, ist die Ordinate dann senkrecht zur Abszisse entlang der Hinterachse ausgerichtet.

Um eine Identifikation des Objekts über die Schnittstelle zu ermöglichen, werden vorzugsweise folgende Daten in der Schnittstelle abgelegt:
- eine Identifikationsnummer des Objekts,
- die Abszissen-Position eines ersten Punktes des Objekts,
- die Ordinaten-Position des ersten Punktes,
- eine Ungenauigkeit der Abszissen-Position des ersten Punktes,
- eine Ungenauigkeit der Ordinaten-Position des ersten Punktes,
- die Abszissen-Position eines zweiten Punktes des Objekts,
- die Ordinaten-Position des zweiten Punktes,
- eine Ungenauigkeit der Abszissen-Position des zweiten Punktes,
- eine Ungenauigkeit der Ordinaten-Position des zweiten Punktes,
- eine Typdefinition des Objekts.

Als Typdefinition des Objekts wird angegeben, ob es sich um ein punktförmiges Objekt handelt oder ein Objekt, das eine Strecke in der Fahrzeugumgebung begrenzt. Zusätzlich kann als Typdefinition auch angegeben werden, ob es sich um ein nicht gültiges Objekt handelt. Wenn das Objekt punktförmig ist, sind die Koordinaten des ersten Punktes mit den Koordinaten des zweiten Punktes identisch. Dies ist zum Beispiel bei einem runden Pfosten der Fall.

Wenn zwei Punkte mit unterschiedlichen Koordinaten detektiert werden, jedoch die tatsächliche Größe des Objekts nicht erkannt wird, wird durch den ersten und den zweiten Punkt eine detektierte Strecke beschrieben, die Punkte geben jedoch nicht die Eckpunkte des Objektes an. Das Objekt kann sich also entlang der Strecke über die Punkte ausdehnen. Bei einem weiteren Typ, der auftreten kann, wird nur ein Ende des Objekts detektiert. Dieses detektierte Ende des Objekts wird durch den ersten Punkt definiert. Der zweite Punkt beschreibt das Ende der detektierten Strecke, wobei sich das Objekt über den zweiten Punkt hinaus weiter erstrecken kann. Als weiterer Objekttyp wird die tatsächliche Größe des Objekts detektiert. Die Objektenden werden dabei durch den ersten und den zweiten Punkt beschrieben. Durch die Angabe des Objekttyps wird einem Fahrassistenz-System, das die Daten der Schnittstelle verwendet, mitgeteilt, inwieweit die tatsächliche Länge oder Breite eines Objekts detektiert wurde oder ob sich das Objekt über die detektierten Punkte erstrecken kann.

Um die Umgebung des Fahrzeugs abzubilden, werden Objekte im Umfeld des Fahrzeugs mit Sensoren detektiert und jeweils detektierte Objekte mit zwei Koordinatenpunkten und eine zu dem jeweiligen Koordinatenpunkt zugeordnete Positionsunschärfe beschrieben, wobei die Koordinatenpunkte und die Positionsunschärfen als Daten in einer Schnittstelle abgelegt werden, auf die von Fahrassistenz-Systemen des Kraftfahrzeugs zugegriffen werden kann.

Durch die Bestimmung der Kollisionswahrscheinlichkeit ist es möglich, dass ein Fahrassistenz-System, beispielsweise ein Fahrassistenz-System zur Unterstützung des Einparkvorganges, selbsttätig bei Kollisionsgefahr das Fahrzeug zum Stillstand bringen kann. Hierdurch wird ein autonomes Führen des Fahrzeugs durch ein Einparkassistenz-System ermöglicht.

Neben dem Einsatz in einem Einparkassistenz-System ist es zum Beispiel auch möglich, eine intelligente Fahrzeuganzeige für den Fahrer des Kraftfahrzeugs zu ermöglichen, zum Beispiel indem in einer Anzeige in Vogelperspektive dem Fahrer die detektierten Objekte zusammen mit dem möglichen Fahrkurs angezeigt werden und potentielle Kollisionssituationen farblich hervorgehoben werden. Weiterhin ist zum Beispiel auch eine Seitenabsicherung während eines Rangiervorganges denkbar, indem durch Nachverfolgung der detektierten Umgebungsobjekte Warnungen an den Fahrer übermittelt werden, wenn Objekte, die sich außerhalb des Sichtfelds der Sensorik befinden, mit dem Fahrzeug zu kollidieren drohen, wie dies zum Beispiel bei dem zu engen Rangieren um eine Ecke möglich ist.

Zusätzlich zu den vorstehend beschriebenen Daten, die in der Schnittstelle abgelegt werden, ist es - insbesondere bei Verwendung von Einparkassistenz-Systemen - weiterhin sinnvoll, wenn zusätzlich der Bewegungszustand des detektierten Objekts in der Schnittstelle abgelegt wird. Durch das Ablegen des Bewegungszustandes des Objektes kann zum Beispiel unter Berücksichtigung der Bewegung des Fahrzeugs eine Vorhersage eines möglichen Kollisionszeitpunktes erfolgen und damit eine rechtzeitige Warnung an den Fahrer ausgegeben werden. Auch kann das Fahrzeug rechtzeitig bei vollautomatischen Systemen zum Stillstand gebracht werden. Wenn das Objekt quert oder ausschert und sich damit durch die Bewegung wieder aus dem Fahrschlauch entfernt, können unnötige Warnungen unterbunden werden.

Die seitlichen Begrenzungen des Fahrschlauches, das heißt des Bereiches, der vom Fahrzeug beim Durchfahren bedeckt wird, werden im Allgemeinen durch den Weg der kurvenäußeren vorderen Fahrzeugecke und die Bahn der kurveninneren Fahrzeugseite auf der Höhe der Hinterachse bestimmt. Diese Punkte bilden die äußerste Begrenzung der Fläche, die vom Fahrzeug überstrichen wird, so dass während der Fahrzeugbewegung keine Bereiche des Fahrzeugs außerhalb des Fahrschlauchs liegen, wenn diese Punkte zur Begrenzung des Fahrschlauchs herangezogen werden.

Die Positionsunschärfe eines Koordinatenpunkts wird durch eine Gauß-Verteilung um den Koordinatenpunkt beschrieben. Das Maximum der Gauß-Verteilung liegt dabei auf Höhe des Koordinatenpunktes. Durch das Ansetzen der Gauß-Verteilung zur Bestimmung der Positionsunschärfe wird zum Beispiel die Messungenauigkeit bei der Erfassung des Koordinatenpunktes berücksichtigt.

Wenn beide Koordinatenpunkte, durch die das Objekt beschrieben wird, auf der gleichen Seite des Fahrschlauchs liegen, ist es ausreichend, wenn nur der dem Fahrschlauch nächstliegende Koordinatenpunkt des Objekts zur Bestimmung des Überdeckungsgrades herangezogen wird. Hierdurch lässt sich Rechenzeit einsparen, wodurch eine schnellere Bestimmung der Kollisionswahrscheinlichkeit möglich ist. Die Verwendung des dem Fahrschlauch nächstliegenden Koordinatenpunktes ist ausreichend, da sich mit zunehmendem Abstand vom Fahrschlauch die Kollisionswahrscheinlichkeit verringert. Zudem stellt der dem Fahrschlauch nächstliegende Koordinatenpunkt den dichtesten Punkt des Objekts zum Fahrschlauch dar.

Zur Reduktion der Rechenzeit und damit zur Vereinfachung der Bestimmung der Kollisionswahrscheinlichkeit ist es weiterhin ausreichend, wenn zur Bestimmung des Überdeckungsgrades nur die Ordinatenkoordinate des Koordinatenpunktes des Objekts betrachtet wird. Die Verwendung nur der Ordinatenkoordinate hat den Vorteil, dass keine überschneidende Fläche bestimmt werden muss, sondern nur der den Rand des Fahrschlauchs überschneidende Anteil der Positionsunschärfe in Richtung der Ordinate.

Wenn die Koordinatenpunkte des Objekts auf unterschiedlichen Seiten des Fahrschlauchs liegen oder ein Koordinatenpunkt im Fahrschlauch liegt, wird eine Kollisionswahrscheinlichkeit von 100 % angenommen. Die Kollisionswahrscheinlichkeit von 100 % kann angenommen werden, da bei Position der Koordinatenpunkte auf unterschiedlichen Seiten das durch die Koordinatenpunkte beschriebene Objekt quer im Fahrschlauch liegt. Auch wenn nur ein Koordinatenpunkt im Fahrschlauch liegt, so befindet sich zumindest ein Teil des Objekts im Fahrschlauch, so dass eine Kollision bei ungebremster Fahrt des Fahrzeuges sicher ist.

Wenn beide Koordinatenpunkte außerhalb des Fahrschlauchs liegen, jedoch eine Überschneidung mit der Positionsunschärfe detektiert wurde, wird vorzugsweise bei einer Kollisionswahrscheinlichkeit von mindestens 30 % das Fahrzeug zum Stillstand gebracht, bevor die Position des Objekts erreicht ist.

Die Kollisionswahrscheinlichkeit kann dabei zum Beispiel ermittelt werden, indem der y-Anteil der Positionsunschärfe innerhalb des Fahrschlauchs auf die gesamte Positionsunschärfe in y-Richtung bezogen wird. Der so berechnete Quotient ergibt dann die Kollisionswahrscheinlichkeit.

Es ist grundsätzlich davon auszugehen, dass die Kollisionswahrscheinlichkeit kleiner als 50 % ist, wenn die Koordinatenpunkte auf einer Seite außerhalb des Fahrschlauchs liegen und von einer Kollisionswahrscheinlichkeit von mehr als 50 %, wenn einer der Koordinatenpunkte im Fahrschlauch liegt.

### Kurze Beschreibung der Zeichnungen

Ausführungsbeispiele der Erfindung sind in den Figuren dargestellt und werden in der nachfolgenden Beschreibung näher erläutert.

Es zeigen:
- Figur 1: eine aus Bahnplanungspunkten zusammengesetzte Kurstrajektorie zur Umfahrung eines Objekts,
- Figur 2: eine Fahrtrajektorie ohne vorausgegangene Bahnplanung,
- Figur 3: einen Fahrschlauch mit einem durch zwei Koordinatenpunkte charakterisierten Objekt
- Figur 4: eine schematische Darstellung der Überschneidung des Fahrschlauchs mit der Positionsunschärfe eines Koordinatenpunkts in Ordinatenrichtung,
- Figur 5: einen Fahrschlauch mit quer dazu im Fahrschlauch liegendem Objekt.

### Ausführungsbeispiele der Erfindung

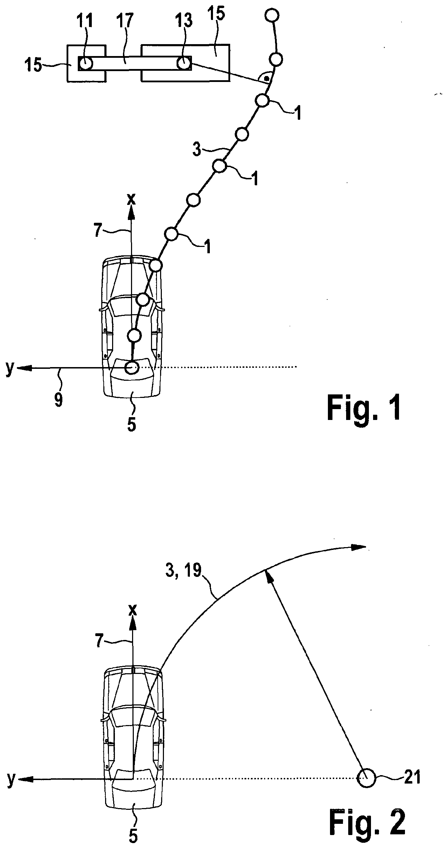

In Figur 1 ist eine aus Bahnplanungspunkten zusammengesetzte Kurstrajektorie zur Umfahrung eines Objekts dargestellt.

Eine aus Bahnplanungspunkten 1 zusammengesetzte Kurstrajektorie 3 wird zum Beispiel bei einem geführten Einparkvorgang verwendet, dem eine entsprechende Bahnplanung vorausging. Hierzu wird zunächst eine geeignete Parklücke vermessen und aus den so vermessenen Daten die Kurstrajektorie 3 über die Bahnplanungspunkte 1 berechnet. Die Kurstrajektorie 3 ist dabei üblicherweise die Bahn, die durch den Mittelpunkt der Hinterachse abgefahren wird. Die Bahnplanungspunkte 1, die die Kurstrajektorie 3 charakterisieren, können zum Beispiel in äquidistanten Abstand auf der Kurstrajektorie 3 angeordnet sein. Alternativ ist es jedoch auch möglich, dass der Abstand der Bahnplanungspunkte 1 abhängig ist von der jeweiligen Bahnkrümmung der Kurstrajektorie 3. So wird zum Beispiel bei einer größeren Bahnkrümmung in einem Bereich ein kleinerer Abstand der Bahnplanungspunkte 1 verwendet. Die einzelnen Bahnplanungspunkte 1 können durch Geradenstücke miteinander verbunden werden. Alternativ ist es jedoch auch möglich, die Bahnplanungspunkte durch Klothoidenstücke zu der Kurstrajektorie 3 zusammenzusetzen. Der Vorteil der Verwendung von Klothoidenstücken ist, dass keine Knicke an den einzelnen Bahnplanungspunkten 1 auftreten, sondern eine stetige Kurve erzeugt wird. Vorteil der Verbindung der Bahnplanungspunkte durch Geradenstücke ist, dass die Berechnung gegenüber der Verwendung von Klothoidenstücken vereinfacht ist. Die einzelnen Bahnplanungspunkte 1 werden durch Koordinaten in einem kartesischen Koordinatensystem beschrieben. Das Koordinatensystem wird vorzugsweise, wie in Figur 1 dargestellt, so ausgerichtet, dass der Ursprung des Koordinatensystems am Mittelpunkt der Hinterachse des Fahrzeugs 5 liegt. Im Koordinatensystem ist die Abszisse 7 mit dem Buchstaben x und die Ordinate 9 mit dem Buchstaben y bezeichnet.

Zur Umfelderkennung sind am Fahrzeug 5 hier nicht dargestellte Sensoren angebracht. Mit den Sensoren kann die Umgebung des Fahrzeugs erfasst werden. Üblicherweise werden die Sensoren im vorderen und im hinteren Stoßfänger des Fahrzeugs 5 positioniert. Üblicherweise eingesetzte Sensoren sind zum Beispiel Ultraschallsensoren oder Radarsensoren. Auch ist es möglich, zum Beispiel eine Kamera zur Erfassung von Objekten zu verwenden. Wenn von den Sensoren ein Objekt detektiert wird, so wird das Objekt durch einen ersten Koordinatenpunkt 11 und einen zweiten Koordinatenpunkt 13 beschrieben. Gegebenenfalls auftretende Messungenauigkeiten werden durch Angabe einer Positionsunschärfe 15, die in Figur 1 durch ein Rechteck um den jeweiligen Koordinatenpunkt 11, 13 dargestellt ist, beschrieben. Eine Strecke 17, die den ersten Koordinatenpunkt 11 und den zweiten Koordinatenpunkt 13 miteinander verbindet, stellt eine Begrenzungslinie dar, die sich durch das detektierte Objekt ergibt. Die genaue Geometrie des Objekts wird nicht ermittelt. Die Stecke 17, die durch den ersten Koordinatenpunkt 11 und den zweiten Koordinatenpunkt 13 begrenzt wird, stellt die nächstgelegene Begrenzung des erkannten Objekts zum Fahrzeug 5 dar.

Erfindungsgemäß werden der erste Koordinatenpunkt 11, der zweite Koordinatenpunkt 13 sowie die Positionsunschärfe 15 zu den Koordinatenpunkten 11 und 13 in einer Schnittstelle abgelegt, auf die von Fahrassistenz-Systemen zugegriffen werden kann. Auf diese Weise ist es zum Beispiel möglich, eine Kurstrajektorie 3 zu berechnen, die das detektierte Objekt, wie in Figur 1 dargestellt, umfährt. Neben einem Einparkassistenz-System können die Daten auch einem beliebigen anderen Assistenzsystem, das im Fahrzeug vorhanden ist, zur Verfügung gestellt werden. Auf diese Weise ist es nicht notwendig, für jedes Fahrzeugassistenz-System separate Messungen durchzuführen, sondern es kann von allen Fahrassistenzsystemen auf einmal ermittelte Daten zugegriffen werden.

In Figur 2 ist eine Fahrtrajektorie ohne vorangegangene Bahnplanung dargestellt. Im Unterschied zu Figur 1, bei der durch ein entsprechendes Fahrassistenzsystem eine Kurstrajektorie 3 berechnet wird, um ein bestimmtes Ziel zu erreichen, wird für den Fall, dass keine Bahnplanung vorliegt, beispielsweise wenn der Fahrer selbsttätig ohne Verwendung eines entsprechenden Einparkassistenz-Systems in eine Parklücke einparkt, eine Fahrtrajektorie zum Beispiel aus dem aktuellen Fahrzeug-Bewegungszustand ermittelt. So wird als Kurstrajektorie 3 zum Beispiel eine momentan befahrende Kreisbahn 19 verwendet, die sich durch einen aktuell anliegenden Lenkeinschlag ergibt. Die Kreisbahn 19 wird dabei um einen Mittelpunkt 21 geführt. Der Mittelpunkt 21 befindet sich dabei auf Höhe der Hinterachse des Fahrzeugs 5.

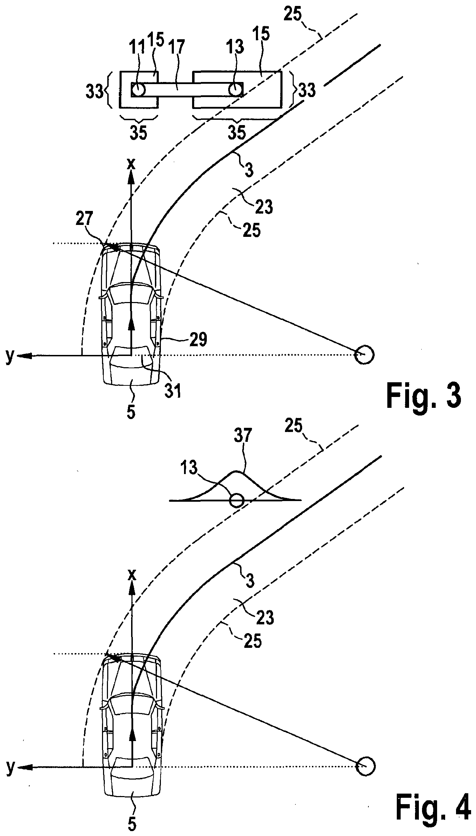

In Figur 3 ist ein Fahrschlauch mit einem durch zwei Koordinatenpunkte charakterisierten Objekt dargestellt.

Eine Kollision des Fahrzeugs 5 mit einem Objekt ergibt sich nicht nur dann, wenn das Objekt auf der Kurstrajektorie 3 liegt, sondern wenn sich Teile des Objekts in einem Fahrschlauch 23, der beim Durchfahren von Fahrzeug 5 überdeckt wird, befinden. Die seitliche Begrenzung 25 des Fahrschlauchs 23 ergibt sich einmal durch die Bahn der kurvenäußeren vorderen Fahrzeugecke 27 und die kurveninnere Fahrzeugseite 29 auf der Hinterachse 31.

Als Maß für die Kollisionswahrscheinlichkeit für ein bestimmtes Objekt kann nun der Überdeckungsgrad der Objektposition mit dem Fahrschlauch 23 unter Berücksichtigung der Positionsunschärfe herangezogen werden. Die Positionsunschärfe 15 wird durch eine Strecke 33 in Abszissenrichtung und eine Strecke 35 in Ordinatenrichtung zu dem jeweiligen Koordinatenpunkt 11, 13 angegeben. Die Länge der Strecke in Abszissenrichtung 33 beziehungsweise Ordinatenrichtung 35, durch die die Positionsunschärfe 15 bezeichnet wird, ist zum Beispiel abhängig von der Position des Punktes zum Fahrzeug.

Da die Kollisionswahrscheinlichkeit mit abnehmender Entfernung des Objekts zum Fahrschlauch 23 zunimmt, ist es ausreichend, zur Bestimmung der Kollisionswahrscheinlichkeit nur den Koordinatenpunkt 13 zugrunde zu legen, der den kleineren Abstand zum Fahrschlauch 23 beziehungsweise zur Kurstrajektorie 3 aufweist. Eine schematische Darstellung der Überschneidung des Fahrschlauchs 23 mit der Positionsunschärfe eines Koordinatenpunkts in Ordinatenrichtung ist in Figur 4 dargestellt. Der in Figur 4 dargestellte Koordinatenpunkt entspricht dem zweiten Koordinatenpunkt 13 der Figur 2, der dem Koordinatenpunkt markiert, der näher zur Kurstrajektorie 3 liegt. Die seitlichen Begrenzungen 25 des Fahrschlauchs 23 sind auch in Figur 4 durch gestrichelte Linien dargestellt.

Eine weitere Vereinfachung ist möglich, wenn zur Bestimmung der Kollisionswahrscheinlichkeit nur der Überdeckungsgrad in Ordinatenrichtung bestimmt wird. In diesem Fall wird nicht die überschneidende Fläche bestimmt, sondern der die seitliche Begrenzung 25 des Fahrschlauchs 23 überschneidende Anteil der Positionsunschärfe in Ordinatenrichtung, der durch die Strecke 35 dargestellt ist. Die Positionsunschärfe kann dabei in Form einer Gauß-Verteilung 37 angenommen werden. Das Maximum der Gauß-Verteilung 37 befindet sich dabei auf Höhe des Koordinatenpunkts 13. Mit zunehmender Entfernung vom Koordinatenpunkt 13 nimmt der Wert der Gauß-Verteilung 37 ab. Bei der Berechnung der Kollisionswahrscheinlichkeit bedeutet dies, dass mit zunehmender Entfernung des Fahrschlauchs 23 vom Koordinatenpunkt 13 die Kollisionswahrscheinlichkeit ebenfalls abnimmt.

Wenn der Koordinatenpunkt 13 außerhalb des Fahrschlauchs 23 liegt, ergibt sich unter Berücksichtigung der Positionsunschärfe in Form der Gauß-Verteilung eine Kollisionswahrscheinlichkeit von weniger als 50 % und bei einer Position des Koordinatenpunkt 13 im Fahrschlauch von mehr als 50 %.

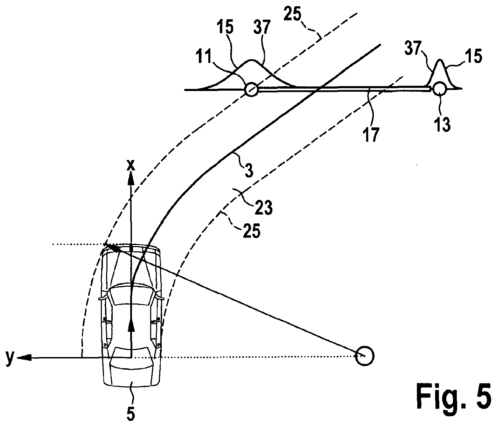

Ein Sonderfall ist in Figur 5 dargestellt. Hier liegt ein Objekt quer im Fahrschlauch, wobei sich die Koordinatenpunkte jeweils auf unterschiedlichen Seiten des Fahrschlauchs befinden.

Zur Bestimmung der Kollisionswahrscheinlichkeit ist es in diesem Fall einerseits möglich, die Positionsunschärfen beider Koordinatenpunkte 11, 13 auszuwerten. Die Positionsunschärfe 15 wird hier wieder als Gauß-Verteilung 37 angenommen. Als relevantes Maß ist zu bestimmen, mit welcher Wahrscheinlichkeit der zweite Koordinatenpunkt 13 außerhalb der dem ersten Koordinatenpunkt 11 gegenüberliegenden Fahrschlauchhälfte liegen kann.

Da im Allgemeinen für den Fall, dass der erste Koordinatenpunkt 11 und der zweite Koordinatenpunkt 13 auf gegenüberliegenden Seiten des Fahrschlauchs liegen, davon auszugehen ist, dass sich das durch die Koordinatenpunkte 11, 13 charakterisierte Objekt quer zum Fahrschlauch 23 befindet, kann davon ausgegangen werden, dass die Kollisionswahrscheinlichkeit 100 % beträgt.

## Patentansprüche

1. Verfahren zur Ermittlung der Kollisionswahrscheinlichkeit eines Fahrzeugs (5) mit einem Objekt von dem eine Kollisionswahrscheinlichkeit ausgehen kann, folgende Schritte umfassend:
(a) Abbilden der Umgebung des Fahrzeugs (5)
wobei Objekte im Umfeld des Fahrzeugs (5) mit Sensoren detektiert werden, wobei jeweils detektierte Objekte von denen eine Kollisionswahrscheinlichkeit ausgehen kann mit genau zwei Koordinatenpunkten (11, 13) sowie einer zu dem jeweiligen Koordinatenpunkt (11, 13) zugeordneten Positionsunschärfe (15) beschrieben werden, wobei die Koordinatenpunkte (11, 13) und die Positionsunschärfen (15) als Daten in einer Schnittstelle abgelegt werden, auf die von Fahrassistenz-Systemen des Fahrzeugs (5) zugegriffen werden kann, und die Positionsunschärfe (15) durch eine Gauß-Verteilung (37) um den Koordinatenpunkt (11, 13) beschrieben wird,
(b) Ermitteln eines vom Fahrzeug (5) zu durchfahrenden Fahrschlauchs (23),
(c) Bestimmen des Überdeckungsgrades des Objekts mit dem Fahrschlauch (23) und damit der Kollisionswahrscheinlichkeit unter Berücksichtigung der Positionsunschärfe (15), die durch eine Gauß-Verteilung (37) um den Koordinatenpunkt (11, 13) beschrieben wird.

2. Verfahren gemäß Anspruch 1, **dadurch gekennzeichnet, dass** die seitlichen Begrenzungen (25) des Fahrschlauchs (23) durch den Weg der kurvenäußeren vorderen Fahrzeugecke (27) und die Bahn der kurveninneren Fahrzeugseite (29) auf Höhe der Hinterachse (31) bestimmt werden.

3. Verfahren gemäß einem der Ansprüche 1 bis 2, **dadurch gekennzeichnet, dass** nur der dem Fahrschlauch (23) nächstliegende Koordinatenpunkt (13) des Objekts zur Bestimmung des Überdeckungsgrads herangezogen wird, wenn beide Koordinatenpunkte (11, 13), durch die das Objekt beschrieben wird, auf der gleichen Seite des Fahrschlauchs (23) liegen.

4. Verfahren gemäß einem der Ansprüche 1 bis 3, **dadurch gekennzeichnet, dass** zur Bestimmung des Überdeckungsgrades nur die Ordinatenkoordinate des Koordinatenpunktes (11, 13) des Objekts betrachtet wird.

5. Verfahren gemäß einem der Ansprüche 1 bis 2, **dadurch gekennzeichnet, dass** eine Kollisionswahrscheinlichkeit von 100 % angenommen wird, wenn die Koordinatenpunkte (11, 13) des Objekts auf unterschiedlichen Seiten des Fahrschlauchs (23) liegen oder ein Koordinatenpunkt (11, 13) im Fahrschlauch (23) liegt.

6. Verfahren gemäß einem der Ansprüche 1 bis 5, **dadurch gekennzeichnet, dass** bei einer Kollisionswahrscheinlichkeit von mindestens 30 % das Fahrzeug (5) zum Stillstand gebracht wird, bevor die Position des Objekts erreicht ist.

7. Verfahren gemäß Anspruch 1, **dadurch gekennzeichnet, dass** als weiteres Element in der Schnittstelle abgelegt wird, ob das detektierte Objekt punktförmig ist oder ob die Koordinatenpunkte (11, 13) eine Strecke (17) markieren.

8. Verfahren gemäß einem der Ansprüche 1 und 7, **dadurch gekennzeichnet, dass** als Bezugskoordinatensystem ein kartesisches Koordinatensystem mit dem Mittelpunkt der Hinterachse als Ursprung verwendet wird.

9. Verfahren gemäß einem der Ansprüche 1, 7 und 8, **dadurch gekennzeichnet, dass** die Abszisse (7) in Fahrtrichtung und die Ordinate (9) senkrecht dazu entlang der Hinterachse ausgerichtet sind.

## Claims

1. Method for determining the probability of a collision of a vehicle (5) with an object which can give rise to a probability of a collision, comprising the following steps:
(a) displaying the surroundings of the vehicle (5), wherein objects in the surroundings of the vehicle (5) are detected with sensors, wherein respectively detected objects which can give rise to a probability of a collision are described with precisely two coordinate points (11, 13) and a degree of position fuzziness (15) which is assigned to the respective coordinate point (11, 13), wherein the coordinate points (11, 13) and the degrees of position fuzziness (15) are stored as data in an interface which can be accessed by driving assistance systems of the vehicle (5), and the position fuzziness (15) is described by a Gaussian distribution (37) about the coordinate point (11, 13),
(b) determining a driving tube (23) to be travelled through by the vehicle(s), and
(c) determining the degree of coverage of the object with the driving tube (23) and therefore the probability of a collision taking into account the position fuzziness (15) which is described by a Gaussian distribution (37) about the coordinate point (11, 13).

2. Method according to Claim 1, **characterized in that** the lateral boundaries (25) of the driving tube (23) are determined by the travel of the front corner (27) of the vehicle on the outside of the bend and the path of the vehicle side (29) on the inside of the bend at the level of the rear axle (31) .

3. Method according to one of Claims 1 to 2, **characterized in that** only the coordinate point (13) of the object, which is closest to the driving tube (23) is used to determine the degree of coverage if both coordinate points (11, 13) which describe the object lie on the same side of the driving tube (23).

4. Method according to one of Claims 1 to 3, **characterized in that** only the ordinate coordinate of the coordinate point (11, 13) of the object is considered for the determination of the degree of coverage.

5. Method according to one of Claims 1 to 2, **characterized in that** a probability of a collision of 100% is assumed if the coordinate points (11, 13) of the object lie on different sides of the driving tube (23) or one coordinate point (11, 13) lies in the driving tube (23).

6. Method according to one of Claims 1 to 5, **characterized in that** in the event of a probability of a collision of at least 30%, the vehicle (5) is brought to a standstill before the position of the object is reached.

7. Method according to Claim 1, **characterized in that** information as to whether the detected object is punctiform or whether the coordinate points (11, 13) mark a section (17) of a route is stored as further element in the interface.

8. Method according to one of Claims 1 and 7, **characterized in that** a Cartesian coordinate system with the centre point of the rear axis as an origin is used as a reference coordinate system.

9. Method according to one of Claims 1, 7, and 8, **characterized in that** the abscissa (7) is oriented in the direction of travel and the ordinate (9) is oriented perpendicularly thereto along the rear axis.

## Revendications

1. Procédé pour calculer la probabilité de collision d'un véhicule (5) avec un objet à partir duquel on peut déduire une probabilité de collision, comprenant les étapes suivantes :
(a) représentation de l'environnement du véhicule (5), les objets placés dans l'environnement du véhicule (5) étant détectés à l'aide de capteurs, les objets respectivement détectés à partir desquels on déduit une probabilité de collision sont décrits avec précisément deux points de coordonnées (11, 13) ainsi qu'un flou de position (15) associé au point de coordonnées (11, 13) respectif, les points de coordonnées (11, 13) et les flous de position (15) étant mémorisés sous la forme de données dans une interface à laquelle les systèmes d'assistance à la conduite du véhicule (5) peuvent accéder et le flou de position (15) étant décrit par une répartition gaussienne (37) autour du point de coordonnées (11, 13),
(b) calcul d'un tube de conduite (23) à parcourir avec le véhicule (5) ;
(c) détermination du degré de recouvrement de l'objet avec le tube de conduite (23) et ainsi de la probabilité de collision en tenant compte du flou de position (15) décrit par une répartition gaussienne (37) autour du point de coordonnées (11, 13).

2. Procédé selon la revendication 1, **caractérisé en ce que** les délimitations latérales (25) du tube de conduite (23) sont déterminées par la trajectoire de l'extérieur de virage du coin avant de véhicule (27) et par la trajectoire de l'intérieur de virage du côté de véhicule (29) situé à la hauteur de l'essieu arrière (31) .

3. Procédé selon l'une quelconque des revendications 1 à 2, **caractérisé en ce que** seul le point de coordonnées (13) de l'objet suivant le tube de conduite (23) peut être utilisé pour déterminer le degré de recouvrement lorsque les deux points de coordonnées (11, 13) à travers lesquels l'objet est décrit reposent du même côté du tube de conduite (23).

4. Procédé selon l'une quelconque des revendications 1 à 3, **caractérisé en ce qu'**on considère uniquement la coordonnée d'ordonnée du point de coordonnées (11, 13) de l'objet pour déterminer le degré de recouvrement.

5. Procédé selon l'une quelconque des revendications 1 à 2, **caractérisé en ce qu'**une probabilité de collision de 100 % est supposée lorsque les points de coordonnées (11, 13) de l'objet reposent sur différents côtés du tube de conduite (23) ou qu'un point de coordonnées (11, 13) se situe dans le tube de conduite (23).

6. Procédé selon l'une quelconque des revendications 1 à 5, **caractérisé en ce qu'**en cas de probabilité de collision d'au moins 30 %, le véhicule (5) est amené à l'arrêt avant d'atteindre la position de l'objet.

7. Procédé selon la revendication 1, **caractérisé en ce que** l'élément supplémentaire consistant à savoir si l'objet détecté est en forme de point ou si les points de coordonnées (11, 13) marquent un tronçon (17) est mémorisé dans l'interface.

8. Procédé selon l'une quelconque des revendications 1 et 7, **caractérisé en ce que** le système de coordonnées de référence est un système de coordonnées cartésiennes ayant pour origine le point central de l'essieu arrière.

9. Procédé selon l'une quelconque des revendications 1, 7 et 8, **caractérisé en ce que** l'abscisse (7) est orientée dans la direction de conduite et que l'ordonnée (9) est orientée perpendiculairement à elle le long de l'essieu arrière.
